Europäisches Patentamt

European Patent Office

Office européen des brevets

(11) Numéro de publication: **0 352 202**
**A1**

# (12) DEMANDE DE BREVET EUROPEEN

(21) Numéro de dépôt: 89420258.9

(22) Date de dépôt: 17.07.89

(51) Int. Cl.⁵: **F 16 N 9/02**
**D 03 C 3/24**

(30) Priorité: 18.07.88 FR 8809901

(43) Date de publication de la demande:
24.01.90 Bulletin 90/04

(84) Etats contractants désignés:
BE CH DE ES FR GB IT LI

(71) Demandeur: ETABLISSEMENTS STAUBLI - VERDOL,
*Société à responsabilité limitée:*
31, Avenue des Frères Lumière
F-69680 Chassieu (FR)

(72) Inventeur: Bassi, Dario
44, Rue des Treilles
F-69960 Corbas (FR)

Palau, Joseph
Les Perris Duingt
F-74410 Saint Jorioz (FR)

(74) Mandataire: Karmin, Roger et al
Cabinet MONNIER 150, Cours Lafayette
F-69003 Lyon (FR)

(54) Palonnier de dispositif de formation de la foule comportant une réserve de graissage.

(57) L'axe de rotation (11) est pourvu d'un alésage (11a) le traversant longitudinalement de part en part et qui est rempli d'un lubrifiant liquide (3) au moment de l'assemblage du palonnier, afin que par capillarité ledit liquide lubrifie les parties dudit axe (11) qui tourillonnent dans les joues (2) de la chape.

## Description

On a décrit dans le brevet Européen 86 420 214.8 au nom de la présente Demanderesse un palonnier utilisé usuellement dans un mécanisme pour la formation de la foule d'un métier à tisser, dont les deux poulies sont chacune solidaires d'un axe qui tourne dans des alésages ménagés dans des joues de la chape du palonnier. La chape en question est réalisée sous la forme de deux joues moulées d'une seule pièce en matière plastique semi-rigide qui sont écartées pour permettre la mise en place des axes dans leurs alésages.

Bien que la chape soit réalisée en une matière plastique qui présente un bon coefficient de frottement, on assiste quelquefois à des grippages des axes des poulies, ce qui entrave le bon fonctionnement du dispositif de formation de la foule.

Les perfectionnements qui font l'objet de la présente invention visent à remédier à ces inconvénients et à permettre d'incorporer dans le palonnier une réserve de graissage des axes des poulies.

A cet effet, chacun des axes de rotation des poulies est pourvu d'un alésage le traversant longitudinalement de part en part et qui est rempli d'un lubrifiant liquide au moment de l'assemblage du palonnier, afin que par capillarité, ledit liquide lubrifie les parties dudit axe qui tourillonnent dans les joues de la chape.

Celle-ci est réalisée en deux parties établies en matière plastique qui sont assemblées par exemple par soudure à ultra-sons, collage etc...

Le dessin annexé, donné à titre d'exemple, permettra de mieux comprendre l'invention, les caractéristiques qu'elle présente et les avantages qu'elle est susceptible de procurer :

Fig. 1 est une vue éclatée des différents éléments constituant un palonnier établi conformément à l'invention.

Fig. 2 est une coupe longitudinale d'un palonnier à l'état monté.

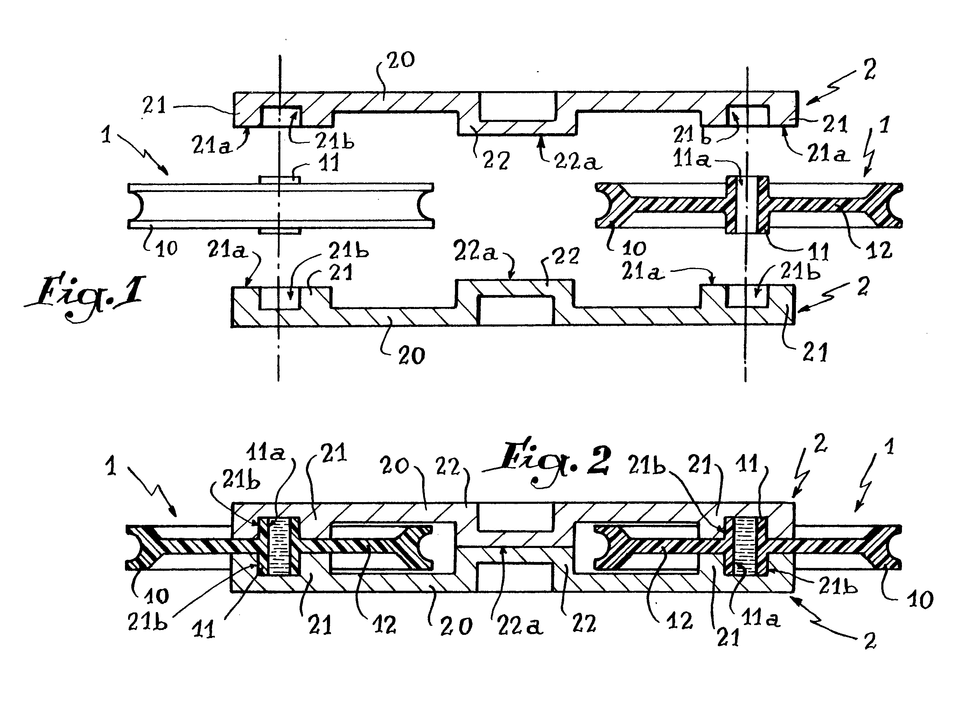

On a illustré en fig. 1 les deux poulies 1 d'un palonnier suivant l'invention, destinées à coopérer d'une part avec la liaison funiculaire reliant deux crochets d'une mécanique d'armure ou analogue et d'autre part avec la lisse qui doit être manoeuvrée par lesdits crochets pour ouvrir ou fermer le pas de la foule. Chaque poulie 1 est réalisée en une matière plastique appropriée et elle comporte une jante périphérique 10 reliée à un moyeu central 11 par un voile mince 12. Le moyeu central massif 11 peut être éventuellement surmoulé sur un insert métallique destiné à renforcer sa résistance. On observe que le moyeu est pourvu d'un alésage longitudinal 11a qui le traverse de part en part et constitue une cavité.

Les deux poulies 1 sont destinées à être montées dans une chape réalisée par l'assemblage de deux joues 2 fabriquées par moulage d'une matière plastique appropriée. Chacune des joues comprend un flasque central 20 de forme allongée et comportant à chacune de ses extrémités un bossage 21 dont l'une des faces 21a est pourvue d'un alésage borgne 21b. Le centre du flasque 20 est muni d'un bossage creux 22 plus épais que les bossages 21. De cette manière, lorsque les deux joues sont placées l'une contre l'autre (fig. 2), les faces en vis-à-vis 22a des deux bossages 22 se trouvant en contact, il reste un jour entre ceux 21. Ainsi quand les parties latérales du moyeu 11 constituant l'axe de la poulie sont engagées dans les alésages borgnes 21b, le voile 12 de la poulie peut tourner librement entre les faces 21a des bossages 21.

Conformément à l'invention, on prévoit que les extrémités du moyeu 11 ou axe des poulies 1 ménagent un jeu fonctionnel contre les fonds des deux alésages borgnes 21b, tandis que le diamètre dudit moyeu est tel que ce dernier s'engage à glissement juste dans l'alésage borgne correspondant.

Lors du montage et suivant l'invention, on place une joue 2 horizontalement, puis on engage l'une des parties latérales du moyeu ou axe 11 d'une des poulies 1 dans l'un des alésages 21b de ladite joue. On déverse ensuite un liquide lubrifiant 3 tel que de l'huile dans l'alésage 11a du moyeu 11. On procède ensuite de la même façon pour la seconde poulie, puis on coiffe l'ensemble ainsi réalisé avec la deuxième joue pour obtenir l'assemblage illustré en fig. 2. Il suffit ensuite de souder ensemble ou de coller les bossages 22 pour obtenir un ensemble rigide qui permet toutefois la rotation libre des deux poulies.

En fonctionnement, l'huile contenue dans les alésages 11a ou cavités s'écoule par capillarité en direction des alésages borgnes 21b des joues 2 de manière à assurer la lubrification entre les axes des poulies et les joues.

On réalise ainsi un palonnier qui, même en conditions sévères de travail, présente une durée de vie très importante.

## Revendications

1. Palonnier du genre comportant une chape par rapport aux joues (2) de laquelle deux poulies (1) sont montées en tandem à rotation libre, chaque poulie comportant un moyeu (11) formant axe de rotation massif qui tourne dans des alésages en vis-à-vis (21b) ménagés dans lesdites joues (2), caractérisé en ce que l'axe de rotation (11) est pourvu d'un alésage (11a) le traversant longitudinalement de part en part et qui est rempli d'un lubrifiant liquide (3) au moment de l'assemblage du palonnier, afin que par capillarité ledit liquide lubrifie les parties dudit axe (11) qui tourillonnent dans les joues (2) de la chape.

2. Palonnier suivant la revendication 1, caractérisé en ce que la chape est réalisée en deux parties établies en matière plastique et qui sont assemblées par exemple par soudure à ultra-sons.

*Fig.1*

*Fig.2*

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | DE-A-2529950 (FIAT-ALLIS)<br>* page 4, ligne 8 - ligne 22; figure 1 *<br>--- | 1 | F16N9/02<br>D03C3/24 |
| A | US-A-1648299 (FEKETE)<br>* page 1, ligne 49 - ligne 61; figures 2-4 *<br>--- | 1 | |
| A,D | EP-A-0214074 (STAUBLI-VERDOL)<br>----- | | |

|  |  |  | **DOMAINES TECHNIQUES RECHERCHES (Int. Cl.5 )** |
|---|---|---|---|
|  |  |  | D03C<br>F16N |

Le présent rapport a été établi pour toutes les revendications

| Lieu de la recherche | Date d'achèvement de la recherche | Examinateur |
|---|---|---|
| LA HAYE | 14 SEPTEMBRE 1989 | BOUTELEGIER C.H.H. |